# EUROPEAN PATENT APPLICATION

(11) **EP 4 770 072 A1**
(43) Date of publication of application: **01.07.2026**
(21) Application number: 25226746.3
(22) Date of filing: 23.12.2025
(51) Int. Cl.: H04N 1/00

(54) **IMAGE INSPECTION APPARARUS, IMAGE FORMING APPARATUS, IMAGE INSPECTION METHOD, AND PROGRAM**

(30) Priority: 27.12.2024 JP 2024231721
(71) Applicant: Konica Minolta, Inc., Tokyo 100-7015 (JP)
(72) Inventor: TORAI, Atsushi, Tokyo, 100-7015 (JP)
(74) Representative: MFG Patentanwälte Meyer-Wildhagen Meggle-Freund Gerhard PartG mbB

(57) **Abstract**

An image inspection apparatus (100) that compares a read image generated by reading a recording medium on which an image is formed with a reference image to detect misregistration of an image formation position on the recording medium, the apparatus including a controller (81) that: aligns an image included in the read image and an image included in the reference image; and detects the misregistration of the image formation position based on a deviation between a reference position in the read image and a reference position in the reference image in an aligned state. The controller selects a reference position used for detecting the misregistration from reference positions included in the read image and the reference image based on a position of an area in which an image is formed on the recording medium.

## Description

### BACKGROUND OF THE INVENTION

### TECHNICAL FIELD

The present disclosure relates to an image inspection apparatus, an image forming apparatus, an image inspection method, and a program.

### DESCRIPTION OF RELATED ART

In an image forming apparatus (printing machine), adjustment to enable formation of an image at a predetermined position on a recording medium is referred to as registration. Conventionally, a cross-shaped mark (register mark) is used as a register mark for registration, and thus the registration is also referred to as register mark alignment. Registration requires formation of a register mark at a predetermined position on a recording medium and measurement of the deviation amount of the position where the register mark is actually formed. As the register marks, in addition to register mark, rectangles, circles, and the like are used.

Japanese Unexamined Patent Publication No. 2001-270086 discloses a technique of detecting misregistration between a watermark pattern and a printed pattern by reading the positions of a registration mark of the watermark pattern and a registration mark of the printed pattern. According to this technology, it is not necessary for a person to visually confirm whether the position of the printed pattern is correct. Furthermore, since the position of the printed pattern is automatically controlled using the detected deviation amount, manual adjustment work is not required.

Incidentally, the method of detecting misregistration using a register mark (position detection image) cannot be used for a job in which a register mark cannot be formed. In addition, it takes time and effort to add the image register mark to the image. Furthermore, the register mark used for detection of misregistration needs to be finally cut and removed, resulting in waste of the recording medium.

With respect to such a problem, a method of detecting the misregistration without using the register mark by comparing an inspection target image formed on the recording medium with a reference image registered in advance is considered. With this method, for example, mutually corresponding places are found for a read image generated by reading a recording medium on which an inspection target image is formed and a reference image in an area where the images are actually present, and the images are aligned.

### SUMMARY OF THE INVENTION

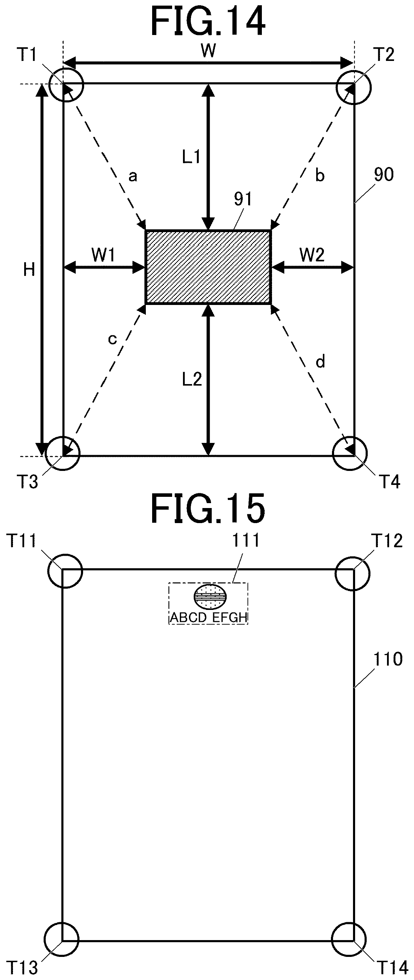

However, in a case where a margin area in which an image does not exist in the recording medium is large, there has been a problem that accuracy of the alignment decreases. For example, as shown in FIG. 15, a case where a printing area 111 in which an image is actually formed exists only in the upper portion of the recording medium 110 is considered. In this case, when the read image and the reference image are aligned with reference to the upper printing area 111 in which the image exists, the lower corners T13 and T14 in which the image does not exist have larger variations than the upper corners T11 and T12. As a result, the deviation amount at the lower corners T13andT14 may be larger than the threshold value used for the determination of misregistration, which may decrease the detection accuracy of misregistration.

The present disclosure has been made in consideration of the above-described problem in the conventional technology, and an object thereof is to improve accuracy in detection of misregistration.

To achieve at least one of the abovementioned objects, according to an aspect of the present invention, image inspection apparatus reflecting one aspect of the present invention is an image inspection apparatus (100) that compares a read image generated by reading a recording medium on which an image is formed with a reference image to detect misregistration of an image formation position on the recording medium, the apparatus comprising a controller (81) that:
aligns an image included in the read image and an image included in the reference image; and
detects the misregistration of the image formation position based on a deviation between a reference position in the read image and a reference position in the reference image in an aligned state, wherein
the controller selects a reference position used for detecting the misregistration from reference positions included in the read image and the reference image based on a position of an area in which an image is formed on the recording medium.

### BRIEF DESCRIPTION OF THE DRAWINGS

The advantages and features provided by one or more embodiments of the invention will become more fully understood from the detailed description given hereinbelow and the appended drawings which are given by way of illustration only, and thus are not intended as a definition of the limits of the present invention, wherein:
Fig. 1 is a schematic configuration diagram of an image forming apparatus in an embodiment of the present disclosure;
Fig. 2 is a block diagram illustrating the functional configuration of the image forming apparatus;
Fig. 3 is a flowchart illustrating misregistration detection processing executed in the image forming apparatus;
FIG. 4 is a diagram for explaining an image position serving as a standard of image matching in the reference image and the read image;
Fig. 5 is a diagram illustrating a method of detecting four corners of the recording medium from the reference image and the read image after alignment;
Fig. 6 is a diagram illustrating an image for comparing points at four corners of a recording medium in a reference image after alignment with points at four corners of a recording medium in a read image;
Fig. 7 is a flowchart illustrating reference position selection processing executed in the image forming apparatus;
Fig. 8 is a flowchart illustrating reference position selection processing executed in the image forming apparatus;
Fig. 9 is a flowchart illustrating reference position selection processing executed in the image forming apparatus;
FIG. 10 is an example of an image for explaining the position of the printing area with respect to the recording medium;
FIG. 11 is an example of an image for explaining the position of the printing area with respect to the recording medium;
FIG. 12 is an example of an image for explaining the position of the printing area with respect to the recording medium
FIG. 13 is an example of an image for explaining the position of the printing area with respect to the recording medium;
FIG. 14 is an example of an image for explaining the position of the printing area with respect to the recording medium; and
FIG. 15 is a view for explaining a problem in the case where the printing area exists only in the upper portion of the recording medium.

### DETAILED DESCRIPTION

Hereinafter, one or more embodiments of the present invention will be described with reference to the drawings. However, the scope of the invention is not limited to the disclosed embodiments.

In the following, embodiment of the present disclosure will be described with reference to the drawings. The advantages and features provided by the embodiment will be understood from the following detailed description and the drawings. However, the scope of the present disclosure is not limited to the embodiment disclosed below or the illustrations in the drawings.

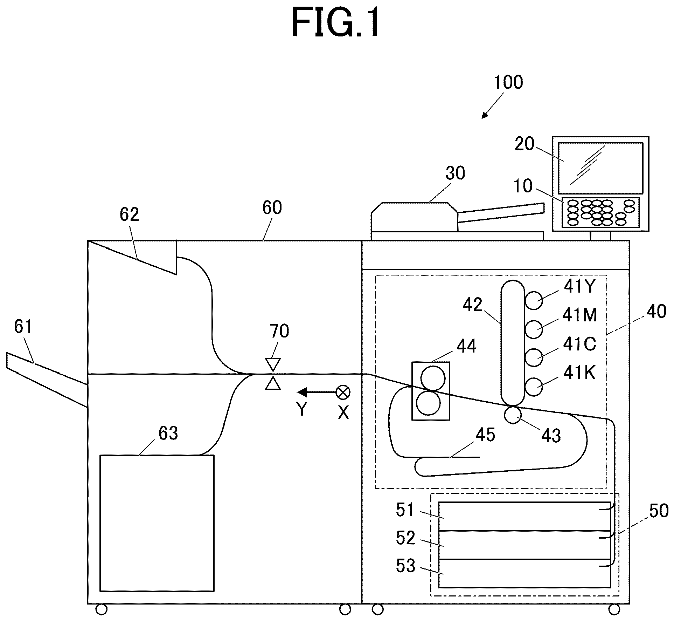

FIG. 1 is a schematic configuration diagram of an image inspection apparatus and an image forming apparatus 100 as an image forming apparatus according to the present embodiment. The image forming apparatus 100 forms a color image on a recording medium such as a sheet by an electrophotographic method. The image forming apparatus 100 forms an image on the basis of image data obtained by reading an image from a document or image data received from an external device. The image forming apparatus 100 includes an operation part 10, a display part 20, a document reading unit 30, an image forming section 40 (image former), a supply section 50, a post-processing section 60, an image reading section 70, and the like.

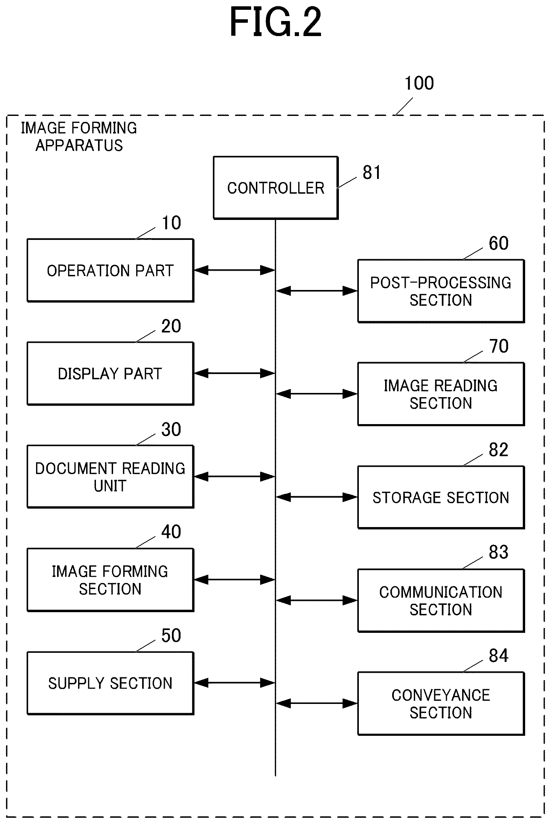

The operation part 10 outputs an operation signal based on a user operation to a controller 81 (hardware processor) (see Fig. 2). The operation part 10 includes various operation keys and a touch screen. The various operation keys receive various instruction operations from a user. The touch screen is formed so as to cover the display screen of the display part 20. The touch screen receives a touch operation on the display screen and detects a touch position.

The display part 20 is configured by a liquid crystal display (LCD). The display part 20 displays various screens according to an instruction of a display signal input from the controller 81.

The document reading unit 30 includes an automatic document feeder (ADF) and a scanner. The document reading unit 30 outputs image data obtained by reading the image of the document to the controller 81.

The image forming section 40 forms an image on the recording medium supplied from the supply section 50. The image forming section 40 includes photosensitive drums 41Y, 41M, 41C, and 41K corresponding to the respective colors of yellow, magenta, cyan, and black. The image forming section 40 further includes an intermediate transfer belt 42, a secondary transfer roller 43, a fixing section 44, and a reversing mechanism 45.

The image forming section 40 uniformly charges the photosensitive drum 41Y, and then performs scanning exposure with a laser beam based on the image data of the yellow color to form an electrostatic latent image. Next, the image forming section 40 makes a yellow toner adhere to the electrostatic latent image on the photosensitive drum 41Y for developing the electrostatic latent image.

Since the photosensitive drum 41M, 41C, and 41K are the same as the photosensitive drum 41Y except that the colors to be handled are different, the description thereof will be omitted.

The image forming section 40 sequentially transfers the toner images in respective colors formed on the photosensitive drums 41Y, 41M, 41C, and 41K onto the rotating intermediate transfer belt 42 (primary transfer). That is, a color toner image in which four color toner images are superimposed is formed on the intermediate transfer belt 42. The image forming section 40 collectively transfers the color toner images on the intermediate transfer belt 42 onto a recording medium by the secondary transfer roller 43 (secondary transfer).

The fixing section 44 fixes the color toner image to the recording medium by applying heat and pressure.

When images are formed on both sides of a recording medium, the reversing mechanism 45 reverses the sides of the recording medium.

The supply section 50 includes supply tray 51 to 53 and supplies a recording medium to the image forming section 40. The supply trays 51 to 53 store recording medium of a predetermined paper type and size for each supply tray.

The post-processing section 60 performs, as necessary, post-processing on the recording medium on which the image has been formed by the image forming section 40. For example, the post-processing includes cutting processing, sorting processing, stapling processing, punch processing, folding processing, and bookbinding processing. The post-processing section 60 ejects the recording medium on which the image is formed to ejection tray 61 and ejection tray 62. Alternatively, the post-processing section 60 accumulates the recording medium on which the image is formed in the large-capacity stacker 63.

The image reading section 70 (reading section, reader) is provided on the downstream of the image forming section 40 in the conveyance direction of the recording medium (Y direction illustrated in Fig. 1). The image reading section 70 reads a conveyed recording medium and generates a read image (image data). The image reading section 70 outputs the generated read image to the controller 81. The image reading section 70 is a color sensor which receives light emitted from a light source and reflected off the surface of the recording medium with a light receiving element and outputs a signal corresponding to the intensity of the light. The image reading section 70 is configured by a line sensor in which a plurality of light receiving elements are arranged at a predetermined interval in a direction (X direction shown in FIG. 1) orthogonal to the conveyance direction (Y direction) of the recording medium. For example, the image reading section 70 is used when reading an image formed on a recording medium by the image forming section 40 and inspecting the position of the image, the color of the image, stains, and the like.

FIG. 2 is a block diagram illustrating a functional configuration of the image forming apparatus 100. As shown in FIG. 2, the image forming apparatus 100 includes an operation part 10, a display part 20, a document reading unit 30, an image forming section 40, a supply section 50, a post-processing section 60, an image reading section 70, a controller 81, a storage section 82, a communication section 83, a conveyance section 84, and the like. Description of the function components already described will be omitted.

The controller 81 includes a central processing unit (CPU), a read only memory (ROM), a random access memory (RAM), and the like. The CPU reads various processing programs stored in the ROM in response to an operation signal input from the operation part 10 or an instruction signal received by the communication section 83, and develops the read programs in the RAM. The CPU centrally controls the operation of each unit of the image forming apparatus 100 in accordance with the program.

The storage section 82 is configured by a nonvolatile storage device such as a hard disk or a flash memory, and stores various data. For example, a reference value V is stored in advance in the storage section 82.

The communication section 83 exchanges data with an external device connected to a communication network such as a local area network (LAN).

The conveyance section 84 includes conveyance rollers for conveyance of the recording medium. The conveyance section 84 conveys the recording medium in the image forming apparatus 100. For example, the conveyance section 84 conveys the recording medium stored in the supply trays 51 to 53 of the supply section 50 to the image forming section 40. The conveyance section 84 conveys a recording medium on which an image is formed by the image forming section 40. The conveyance section 84 conveys a recording medium whose image is to be read by the image reading section 70. The conveyance section 84 conveys the recording medium after image formation to the ejection tray 61 or 62 or the large-capacity stacker 63.

The controller 81 acquires a read image generated by the image reading section 70 reading a recording medium on which an image is formed by the image forming section 40.

The controller 81 compares the read image generated by reading the recording medium on which the image is formed with the reference image to detect the misregistration of the image formation position in the recording medium.

The reference image is registered in advance in the storage section 82. The reference image may be an RIP image (RIP data) or an image generated by reading an image formed on a recording medium (image without misregistration or abnormality).

The misregistration includes a shift (deviation) from a position where an image is to be formed on the recording medium, a front/back position shift in double-sided printing, a color shift, and the like.

The controller 81 aligns the image included in the read image and the image included in the reference image. In the aligned state, the controller 81 detects a misregistration of the image formation position based on a deviation between the reference position in the read image and the reference position in the reference image.

The reference position is a point (position) in the read image and the reference image which is used as a standard in order to detect the misregistration of the image formation position by comparing the read image and the reference image. In the present embodiment, four corners of the recording medium are used as the reference position.

Based on the position of the area where the image is formed on the recording medium, the controller 81 selects, from among the reference positions included in the read image and the reference image, a reference position to be used for detecting misregistration.

The controller 81 calculates the positions of the four corners of the recording medium on the basis of the edge information of the recording medium. The edge information includes the position of the edge, the direction of the edge, and the like. For example, the controller 81 detects a boundary line (edge) between the recording medium area and the background area from the read image. The recording medium area is an area corresponding to the recording medium in the image. The background area is an area corresponding to the outside of the recording medium in the image. Specifically, the controller 81 determines, from the distribution (histogram or the like) of luminance values in the read image, such a threshold value as to achieve separation of the luminance values corresponding to the recording medium area and the luminance values corresponding to the background area. The controller 81 detects the edge of the recording medium in the read image using the threshold value. Normally, since the recording medium is rectangular, the controller 81 detects four straight lines as the edges of the recording medium from the read image. The controller 81 acquires positions of four points as intersections of the four straight lines, and determines the positions of the four points as the positions of the four corners of the recording medium.

In the predetermined direction of the recording medium, the controller 81 determines whether or not the distance from the area where the image is formed to the end portion of the recording medium in the predetermined direction is larger than a preset threshold value. In the predetermined direction of the recording medium, when the distance from the area where the image is formed to the end portion of the recording medium in the predetermined direction is larger than the threshold value, the controller 81 excludes the reference position on the end portion side of the recording medium from the reference positions used for detecting the misregistration. The predetermined direction is, for example, a conveyance direction (sub-scanning direction) of the recording medium. Further, the predetermined direction may be a width direction (main scanning direction) orthogonal to the conveyance direction of the recording medium. When one of the conveyance direction and the width direction of the recording medium is used as the predetermined direction, a direction along the long side of the recording medium is desirably set as the predetermined direction.

The controller 81 selects a reference position having a relatively small distance from the area where the image is formed, as the reference position used for detecting misregistration. The controller 81 excludes, from the reference positions used for detecting misregistration, a reference position located at a relatively large distance from the area where the image is formed. Here, the distance from the "area where an image is formed" to a certain reference position is the distance between a position closest to the reference position in the "area where an image is formed" and the reference position.

The controller 81 selects at least two of the four corners of the recording medium as reference positions used for detecting misregistration.

The controller 81 determines the presence or absence of misregistration of the image formation position by the image forming section 40 by obtaining a deviation amount from a target position with respect to the image formed on the recording medium. For example, the controller 81 detects the front-and-back misregistration at the time of double-sided printing based on the deviation amount.

Next, operation of the image forming apparatus 100 will be described.

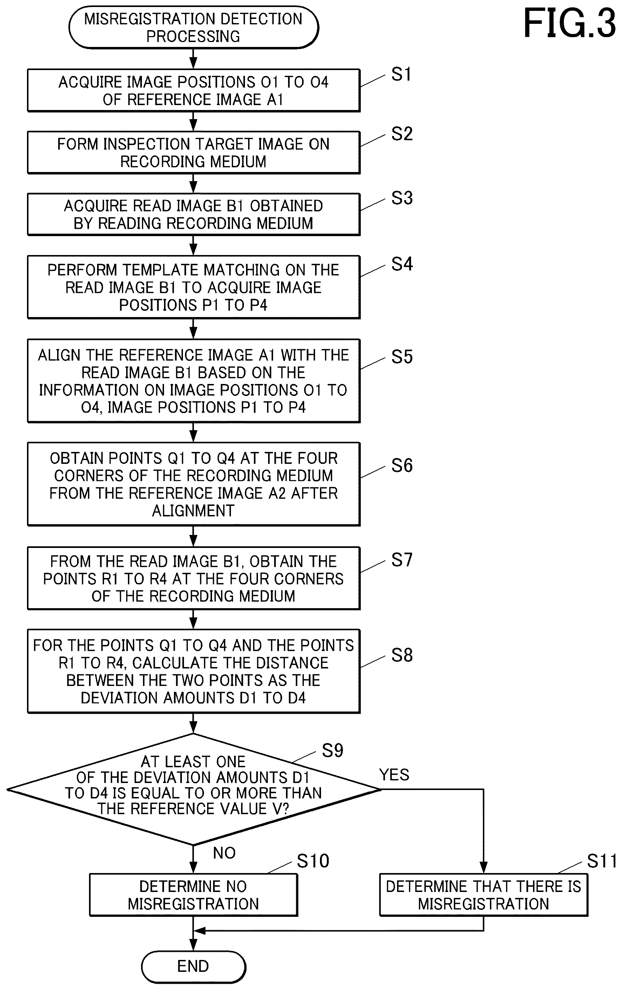

Fig. 3 is a flowchart illustrating misregistration detection processing executed in the image forming apparatus 100. In the misregistration detection processing, the misregistration is detected by comparison with the reference image without using a register mark (position detection image) such as a register mark. This processing is implemented by software processing in cooperation of the controller 81 and the program stored in the ROM.

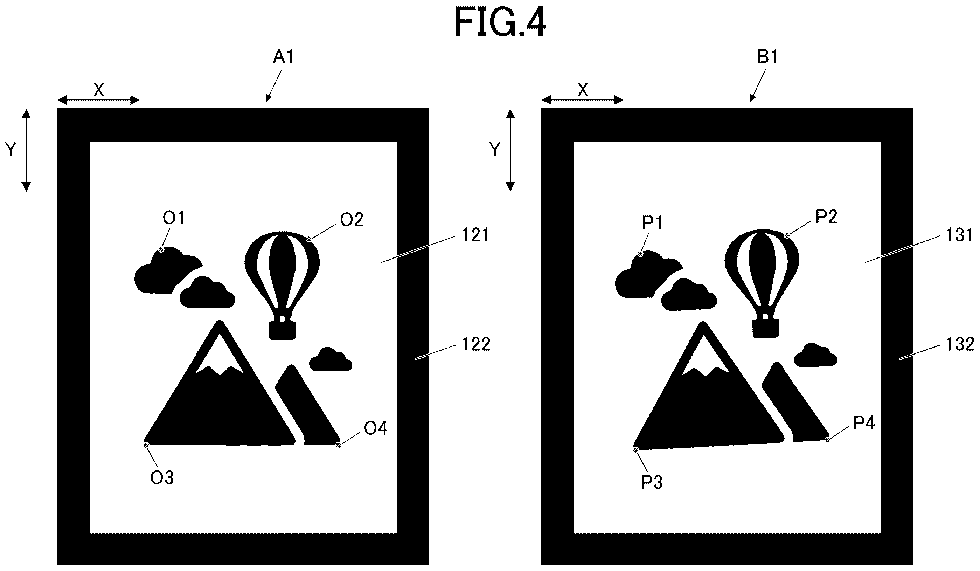

The left diagram of Fig. 4 illustrates an example of the reference image A1. The reference image A1 includes a recording medium area 121 and a background area 122. Note that also in a case where the reference image A1 is a RIP image, the background area 122 corresponding to the outside of the recording medium area 121 is added in a pseudo manner to the reference image A1.

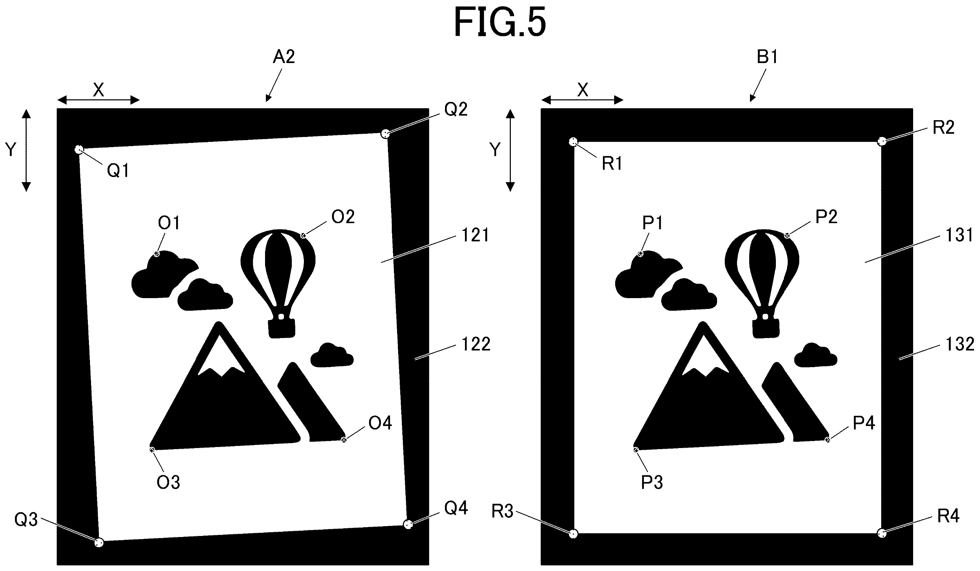

Note that the X direction illustrated in Fig. 4 is a direction (main scanning direction) orthogonal to the conveyance direction of the recording medium. The Y direction illustrated in Fig. 4 is a conveyance direction (sub-scanning direction) of the recording medium. The same applies to the X direction and the Y direction illustrated in Fig. 5.

First, the controller 81 searches the reference image A1 for an image formation position in the image, and acquires image positions O1 to O4 serving as standards (model points) for image matching (step S1). In addition, the controller 81 acquires images around the image positions O1 to O4 as template images. The image formation position is an area where an image is actually formed. It is desirable that the image positions O1 to O4 are positions close to the respective four corners of the recording medium in the area where the image is formed. The accuracy in detection of misregistration increases as the image positions O1 to O4 are closer to the four corners of the recording medium. Furthermore, the template image is desirably an image suitable for template matching.

Next, the controller 81 controls the image forming section 40 to form an inspection target image on the recording medium (step S2). The inspection target image is an image corresponding to the reference image A1, and is an image to be inspected with reference to the reference image A1.

Next, the controller 81 controls the image reading section 70 to read the recording medium on which the inspection target image has been formed by the image forming section 40 and generate a read image B1. The controller 81 controls the conveyance section 84 to cause the image reading section 70 to read the recording medium while conveying the recording medium. The controller 81 acquires, from the image reading section 70, the read image B1 generated by reading the recording medium on which the inspection target image is formed (step S3). The right diagram of Fig. 4 illustrates an example of the read image B1. The read image B1 includes a recording medium area 131 and a background area 132.

Next, the controller 81 performs template matching on the read image B1 with reference to the image positions O1 to O4 as a standard, and acquires the image positions P1 to P4 of the read image B1 (step S4). To be specific, the controller 81 uses the template image acquired from the reference image A1 and the image positions O1 to O4 to find a portion having the highest similarity to the template image from the read image B1. The controller 81 sets points corresponding to the image positions O1 to O4 of the portion found from the read image B1 as the image positions P1 to P4.

Next, based on the image positions O1 to O4 and the information on the image positions P1 to P4, the controller 81 aligns the reference image A1 with the read image B1 (step S5). To be specific, the controller 81 rotates and translates the reference image A1 including the edges of the recording medium such that the image positions O1 to O4 in the reference image A1 overlap the image positions P1 to P4 in the read image B1, respectively. In this way, the controller 81 aligns the image included in the reference image A1 and the image included in the read image B1. The left diagram of Fig. 5 illustrates the reference image A2 after the alignment.

Next, as illustrated in the left part of Fig. 5, the controller 81 obtains, from the reference image A2 after the alignment, points Q1 to Q4 (coordinate) at four corners of the recording medium (recording medium area 121) (step S6). To be specific, the controller 81 detects four straight lines as the edges of the recording medium area 121 from the reference image A2 after the alignment. The controller 81 acquires the positions of four points as the intersections of the four straight lines, and sets the positions of the four points as the positions of the four corners (points Q1 to Q4) of the recording medium area 121. The points Q1 to Q4 are reference positions in the reference image A2 after alignment.

Next, as illustrated in the right part of Fig. 5, the controller 81 obtains, from the read image B1, points R1 to R4 (coordinate) at four corners of the recording medium (recording medium area 131) (step S7). To be specific, the controller 81 detects four straight lines as the edges of the recording medium area 131 from the read image B1. The controller 81 acquires the positions of four points as the intersections of the four straight lines, and sets the positions of the four points as the positions of the four corners (points R1 to R4) of the recording medium area 131. The points R1 to R4 are reference positions in the read image B1.

Next, the controller 81 calculates the distances between the two points, that is, the point Q1^{~} Q4 in the reference image A2 and the point R1^{~} R4 in the read image B1 after the alignment as the deviation amounts D1^{~} D4 (step S8). The controller 81 calculates the deviation amount D1^{~} D4 from the difference between the point Q1^{~} Q4 and the point R1^{~} R4 in each of the X direction and the Y direction.

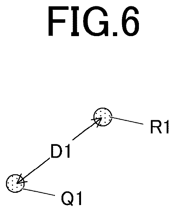

Fig. 6 illustrates an image for comparing the point Q1 and the point R1. A distance between the point Q1 and the point R1 is a deviation amount D1.

Next, the controller 81 determines whether at least one of the deviation amounts D1 to D4 is equal to or more than a preset reference value V (step S9). When all of the amounts of misregistration D1 to D4 are smaller than the reference value V (step S9; NO), the controller 81 determines that there is no misregistration (step S10).

In step S9, if at least one of the deviation amounts D1 to D4 is equal to or more than the reference value V (step S9; YES), the controller 81 determines that there is misregistration (step S11).

After Step S10 or Step S11, the misregistration detection processing ends.

The case where all the four corners of the recording medium are used as the reference position used to detect the misregistration in the misregistration detection processing has been described. Next, determination of which of the four corners of the recording medium is to be selected as the reference position for use in detection of misregistration and which of the four corners is to be excluded from the reference positions for use in detection of misregistration will be described.

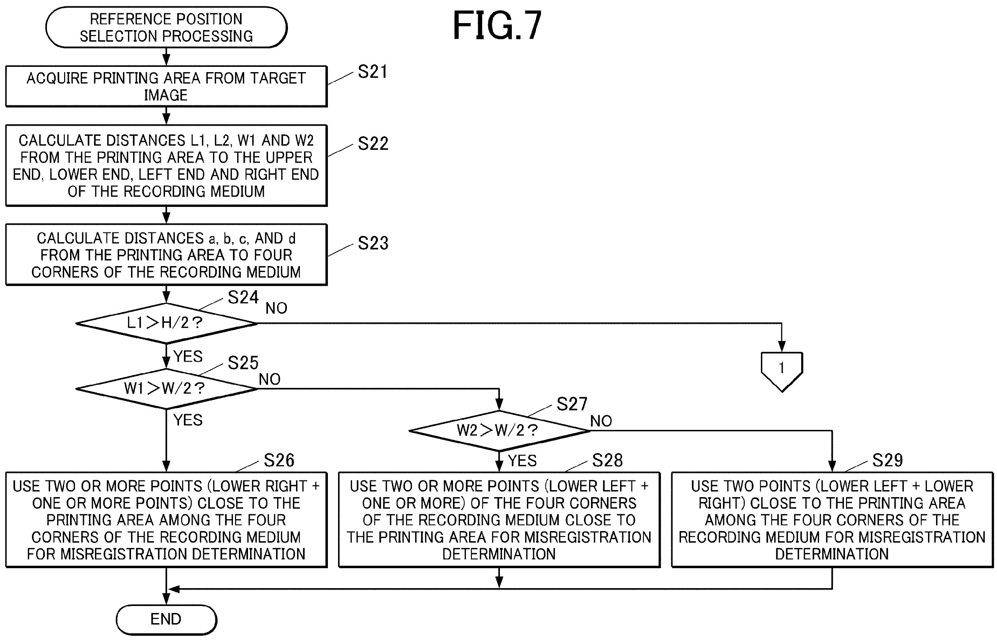

Figs. 7 to 9 are flowcharts illustrating the reference position selection processing executed in the image forming apparatus 100. The reference position selection processing is processing that is performed prior to the misregistration detection processing (refer to Fig. 3). The reference position selection processing is implemented by software processing in cooperation with the controller 81 CPU and the program stored in the ROM.

First, the controller 81 acquires, from the target image, an area (printing area) on the recording medium where the image is to be formed (step S21). Specifically, the controller 81 performs binarization processing on the recording medium area of the reference image using a predetermined threshold value, and extracts pixels where the image is formed. The controller 81 acquires, as the printing area, the smallest rectangle enclosing the pixels on which the image is formed. Here, the acquired printing area is a rectangular area surrounded by straight lines along the conveyance direction and the width direction of the recording medium.

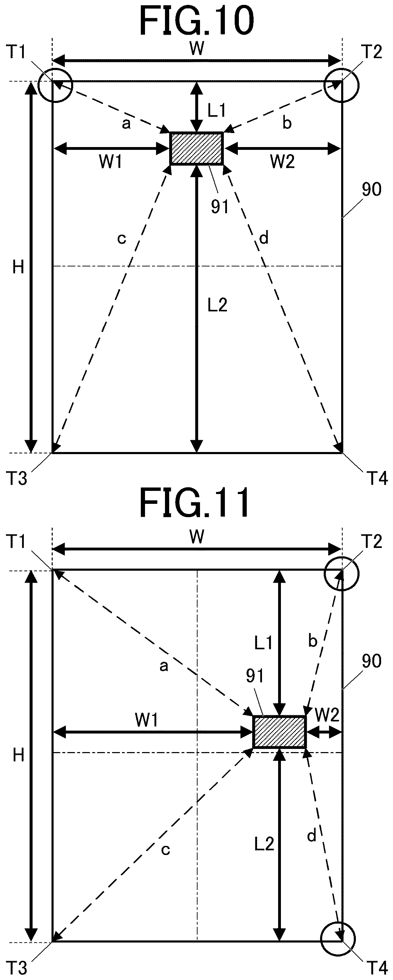

FIGS. 10 to 14 show examples of image (reference image) in which the position of the printing area 91 with respect to the recording medium 90 is different. Let L1 be the distance between the printing area 91 and the upper end of the recording medium 90 in the conveyance direction of the recording medium 90 (the vertical direction in FIG. 10 to FIG. 14), and L2 be the distance between the printing area 91 and the lower end of the recording medium 90 in the conveyance direction of the recording medium 90. In addition, a distance between the printing area 91 and a left end of the recording medium 90 in a width direction (a lateral direction in FIGS. 10 to 14) orthogonal to the conveyance direction of the recording medium 90 is defined as W1, and a distance between the printing area 91 and a right end of the recording medium 90 in the width direction of the recording medium 90 is defined as W2. Further, the length of the recording medium 90 in the conveyance direction is H, and the length of the recording medium 90 in the width direction is W.

The distance between the upper left vertex of the printing area 91 (rectangle) and the upper left corner T1 of the recording medium 90 is defined as a. The distance between the upper right vertex of the printing area 91 and the upper right corner T2 of the recording medium 90 is represented by b. The distance between the lower left vertex of the printing area 91 and the lower left corner T3 of the recording medium 90 is defined as c. Let d be the distance between the lower right vertex of the printing area 91 and the lower right corner T4 of the recording medium 90.

The controller 81 calculates the distance L1 between the printing area 91 and the upper end of the recording medium 90 and the distance L2 between the printing area 91 and the lower end of the recording medium 90 in the conveyance direction of the recording medium 90 (step S22). Furthermore, the controller 81 calculates a distance W1 between the printing area 91 and the left end of the recording medium 90 and a distance W2 between the printing area 91 and the right end of the recording medium 90 in the width direction of the recording medium 90 (step S22).

Next, the controller 81 calculates distances a, b, c, and d from the printing area 91 to the four corners T1 to T4 of the recording medium 90 (step S23).

Next, the controller 81 determines whether or not the distance L1 between the printing area 91 and the upper end of the recording medium 90 in the conveyance direction of the recording medium 90 is greater than half the length H of the recording medium 90 in the conveyance direction (step S24). If the L1 is greater than H/2, the controller 81 determines that no image is present in the upper half area of the recording medium 90; if the L1 is less than H/2, the controller 81 determines that an image is present in the upper half area of the recording medium 90.

If L1 is greater than H/2 (step S24; YES), the process transitions to step S25. In step S25, the controller 81 determines whether the distance W1 between the printing area 91 and the left end of the recording medium 90 in the width direction of the recording medium 90 is greater than half the length W of the recording medium 90 in the width direction. The controller 81 determines that no image is present in the left half area of the recording medium 90 when the W1 is larger than W/2 and determines that an image is present in the left half area of the recording medium 90 when the W1 is smaller than W/2.

If W1 is greater than W/2 (YES in step S25), the controller 81 uses, among the four corners T1 to T4 of the recording medium 90, the lower right corner T4 and one or more points close to the printing area 91 for the misregistration determination (step S26). The controller 81 selects the lower right corner T4 and one or more points as reference positions for use in detection of misregistration.

If W1 is less than or equal to W/2 in step S25 (step S25; NO), the controller 81 determines whether the distance W2 between the printing area 91 and the right end of the recording medium 90 in the width direction of the recording medium 90 is greater than W/2 (step S27). The controller 81 determines that no image is present in the right half area of the recording medium 90 when the W2 is greater than W/2 and determines that an image is present in the right half area of the recording medium 90 when the W2 is less than W/2.

If W2 is greater than W/2 (step S27; YES), the controller 81 uses the lower left corner T3 and one or more points as the points close to the printing area 91 among the four corners T1 to T4 of the recording medium 90 for the misregistration determination (step S28). The controller 81 selects the lower left corner T3 and one or more points as reference positions for use in detection of misregistration.

If, in step S27, W2 is less than or equal to W/2 (step S27; NO), the controller 81 uses, among the four corners T1 to T4 of the recording medium 90, the lower left corner T3 and the lower right corner T4 as points closer to the printing area 91 for the misregistration determination (step S29). The controller 81 selects the lower left corner T3 and the lower right corner T4 as reference positions used for detection of misregistration.

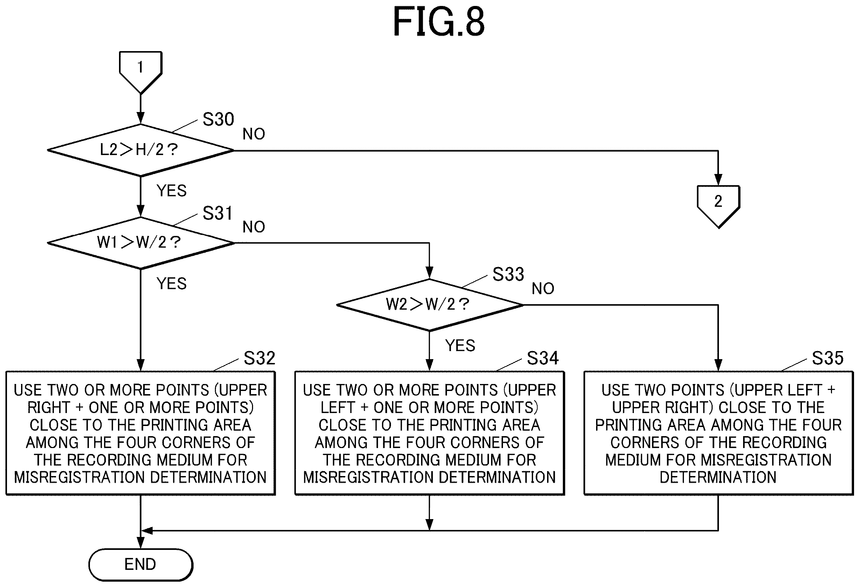

In step S24, if L1 is less than or equal to H/2 (step S24; NO), the process proceeds to step S30 in Fig. 8. In step S30, the controller 81 determines whether the distance L2 between the printing area 91 and the lower end of the recording medium 90 in the conveyance direction of the recording medium 90 is longer than H/2. When the L2 is larger than H/2, the controller 81 determines that there is no image in the lower half area of the recording medium 90, and when the L2 is smaller than H/2, the controller 81 determines that there is an image in the lower half area of the recording medium 90.

If L2 is greater than H/2 (step S30; YES), the controller 81 determines whether W1, which is the distance between the printing area 91 and the left end of the recording medium 90 in the width direction of the recording medium 90, is greater than W/2 (step S31).

If W1 is greater than W/2 (YES in step S31), the controller 81 uses, among the four corners T1 to T4 of the recording medium 90, the upper right corner T2 and one or more points close to the printing area 91 for the misregistration determination (step S32). The controller 81 selects the upper right corner T2 and one or more points as reference positions for use in detection of misregistration.

FIG. 11 is an example of an image corresponding to the step S32. In the example illustrated in Fig. 11, the L2 is greater than H/2 and the W1 is greater than W/2. That is, there is no image in the lower half area of the recording medium 90 and there is no image in the left half area of the recording medium 90. The printing area 91 is located slightly to the right of the recording medium 90. First, the controller 81 selects the upper right corner T2 as the reference position. Next, the controller 81 compares the distance a from the printing area 91 to the upper left corner T1 and the distance d from the printing area 91 to the lower right corner T4, and selects the lower right corner T4 having the shorter distance as the reference position. Thus, the controller 81 sets the upper right corner T2 and the lower right corner T4 as reference positions for use in detection of misregistration.

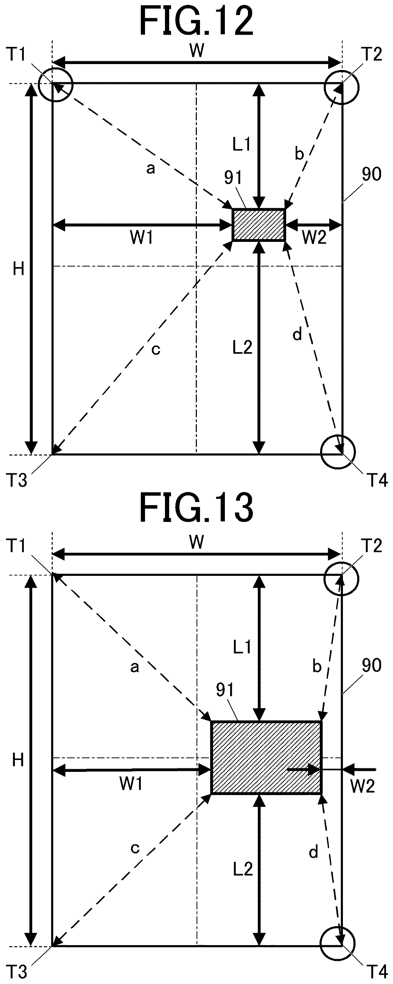

FIG. 12 is an example of an image corresponding to the step S32. Also in the example illustrated in Fig. 12, the L2 is greater than H/2 and the W1 is greater than W/2. That is, there is no image in the lower half area of the recording medium 90 and there is no image in the left half area of the recording medium 90. The printing area 91 is located slightly to the right of the recording medium 90. First, the controller 81 selects the upper right corner T2 as the reference position. Next, the controller 81 compares the distance a from the printing area 91 to the upper left corner T1 with the distance d from the printing area 91 to the lower right corner T4, and selects both the upper left corner T1 and the lower right corner T4 because the distances a and d are the same. Thus, the controller 81 sets the upper left corner T1, the upper right corner T2, and the lower right corner T4 as reference positions for use in detection of misregistration.

If W1 is less than or equal to W/2 (step S31; NO), the controller 81 determines whether the distance W2 between the printing area 91 and the right end of the recording medium 90 in the width direction of the recording medium 90 is greater than W/2 (step S33).

If W2 is greater than W/2 (step S33; YES), the controller 81 uses the upper left corner T1 and one or more points as the points close to the printing area 91 among the four corners T1 to T4 of the recording medium 90 for misregistration determination (step S34). The controller 81 selects the upper left corner T1 and one or more points as reference positions to be used for detection of misregistration.

In step S33, in a case where W2 is equal to or less than W/2 (step S33; NO), the controller 81 uses the upper left corner T1 and the upper right corner T2 as points close to the printing area 91 among four corners T1 to T4 of the recording medium 90 for the misregistration determination (step S35). The controller 81 selects the upper left corner T1 and the upper right corner T2 as reference positions used for detection of misregistration.

FIG. 10 is an example of an image corresponding to the step S35. In the example illustrated in Fig. 10, the L2 is larger than H/2, and no image exists in the lower half area of the recording medium 90. In addition, the W1 is W/2 or less, and the W2 is W/2 or less. The controller 81 excludes the two corners T3 and T4 on the lower end side determined to have no image from the reference position used for detection of misregistration. The controller 81 sets, among the four corners of the recording medium 90, the two corners T1 and T2 on the upper end side as reference positions to be used for detection of misregistration.

Note that the controller 81 may select the two corners T1 and T4 on the upper end side because the distances a and b are the shortest among the distances a to d between the printing area 91 and the four corners T1 to T2 of the recording medium 90.

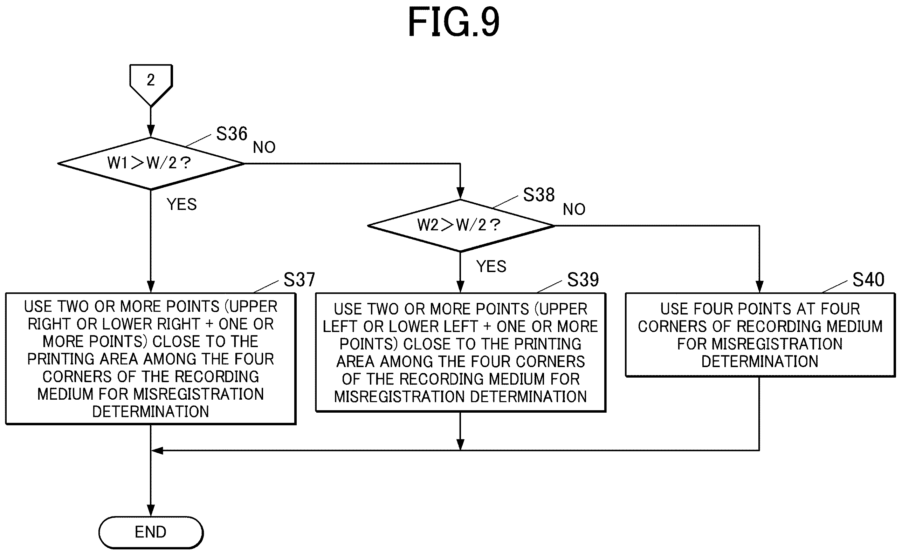

In step S30, if L2 is less than or equal to H/2 (step S30; NO), the process proceeds to step S36 in Fig. 9. In step S36, the controller 81 determines whether the distance W1 between the printing area 91 and the left end of the recording medium 90 in the width direction of the recording medium 90 is greater than W/2.

If W1 is greater than W/2 (step S36; YES), the controller 81 uses the upper right corner T2 or the lower right corner T4 and one or more points as points close to the printing area 91 among the four corners T1 to T4 of the recording medium 90 for misregistration determination (step S37). The controller 81 selects the upper right corner T2 or the lower right corner T4 and one or more points as reference positions for use in detection of misregistration.

FIG. 13 is an example of an image corresponding to the step S37. In the example illustrated in Fig. 13, the L1 is equal to or less than H/2, the L2 is equal to or less than H/2, and the W1 is greater than W/2. That is, there is no image in the left half area of the recording medium 90. The printing area 91 is located slightly to the right of the recording medium 90. First, the controller 81 compares the distance b from the printing area 91 to the upper right corner T2 and the distance d from the printing area 91 to the lower right corner T4, and selects the corner having the shorter distance as the reference position. Next, the controller 81 selects a corner having the shortest distance from the printing area 91 among the remaining three corner points as a reference position. In the example shown in FIG. 13, since the distances b and d are the same, the controller 81 selects the upper right corner T2 and the lower right corner T4. Thus, the controller 81 sets the upper right corner T2 and the lower right corner T4 as reference positions for use in detection of misregistration.

Note that the controller 81 may select the two corners T2 and T4 on the right end side because the distances b and d are the shortest among the distances between the printing area 91 and the four corners T1 to T4 of the recording medium.

If W1 is less than or equal to W/2 in step S36 (step S36; NO), the controller 81 determines whether the distance W2 between the printing area 91 and the right end of the recording medium 90 in the width direction of the recording medium 90 is greater than W/2 (step S38).

If W2 is greater than W/2 (YES in step S38), the controller 81 uses, among the four corners T1 to T4 of the recording medium 90, the upper left corner T1 or the lower left corner T3 and one or more points as points close to the printing area 91 for the misregistration determination (step S39). The controller 81 selects the upper left corner T1 or the lower left corner T3 and one or more points as reference positions to be used for detection of misregistration.

If step S38 is less than or equal to W/2 in step S38 (step S38; NO), the controller 81 uses the four points at the four corners T1 to T4 of the recording medium 90 for the misregistration determination (step S40). The controller 81 selects all the four points of the four corners T1 to T4 as reference positions to be used for detection of misregistration.

FIG. 14 is an example of an image corresponding to the step S40. In the example illustrated in Fig. 14, the L1 is equal to or smaller than H/2, the L2 is equal to or smaller than H/2, the W1 is equal to or smaller than W/2, and the W2 is equal to or smaller than W/2. Since the printing area 91 is located near the center of the recording medium 90, the controller 81 sets the four corners T1 to T4 as reference positions used for detecting the misregistration.

After step S26, step S28, step S29, step S32, step S34, step S35, step S37, step S39, or step S40, the reference position selection processing ends.

The controller 81 executes the misregistration detection processing (Fig. 3) using the reference positions (two or more of the upper left corner, the upper right corner, the lower left corner, and the lower right corner) selected in the reference position selection processing.

To be specific, in step S6, the controller 81 obtains, from the reference image A2 after the alignment, only the selected reference position among the points Q1 to Q4 at the four corners of the recording medium.

In step S7, the controller 81 obtains, from the read image B1, only the selected reference position among the points R1 to R4 at the four corners of the recording medium.

In step S8, with respect to the reference positions obtained from the reference image A2 after the alignment and the reference positions obtained from the read image B1, the controller 81 calculates the distance between two points of the corresponding reference positions as amounts of deviation. In this way, the controller 81 calculates the amount of misregistration for each reference position selected in the reference position selection processing.

In step S9, the controller 81 determines whether at least one of the calculated deviation amounts is equal to or more than a preset reference value V. In a case where all the deviation amounts are smaller than the reference value V (step S9; NO), the controller 81 determines that there is no misregistration (step S10). If at least one of the deviation amounts is equal to or more than the reference value V (step S9; YES), the controller 81 determines that there is misregistration (step S11).

Further, the controller 81 may control the image forming position in the image forming section 40 based on the deviation amount calculated in step S8. Specifically, the controller 81 corrects the image forming position in the image forming section 40 so as to eliminate the misregistration in the image forming section 40. The controller 81 feeds back the deviation amount to an adjustment value for correcting the misregistration.

Further, the controller 81 may inspect the presence or absence of abnormality in the read image B1 based on the reference image A2 and the read image B1 after the alignment. Here, the controller 81 targets abnormality other than misregistration as inspection target. The abnormality in the read image B1 includes image color, stain, and the like. For example, the controller 81 generates a difference image between the reference image A2 and the read image B1 after alignment. The controller 81 generates a difference image by calculating a difference in pixel value (luminance value, RGB value, or the like) of each pixel between both images. The controller 81 performs inspection of the presence or absence of abnormality in the read image B1 by determining whether or not each pixel of the difference image exceeds a predetermined threshold value. Thus, the controller 81 can perform the normal inspection operation together with the detection of misregistration.

Further, when there is an abnormality in the read image B1, the controller 81 may control the conveyance section 84 to discharge the recording medium having an abnormality to an ejection tray different from an ejection tray to which normal recording medium are discharged. The abnormality in the read image B1 may be a misregistration or an abnormality other than a misregistration.

As described above, according to the present embodiment, the controller 81 of the image forming apparatus 100 selects the reference position used for detecting the misregistration from among the reference positions included in the read image and the reference image based on the position of the area (printing area) in which the image is formed on the recording medium. The controller 81 selects the reference position used for detecting the misregistration according to the position of the printing area in the recording medium and then determines the misregistration, and thus it is possible to stably perform the misregistration determination. Therefore, the controller 81 can improve the accuracy in the detection of the misregistration.

Since the controller 81 uses the four corners of the recording medium as the reference positions, the controller 81 can detect misregistration based on the information on the recording medium area that is the largest available area.

The controller 81 calculates the positions of the four corners of the recording medium on the basis of the edge information of the recording medium. Thus, even when the four corners of the recording medium are not included in the read image due to corner folding or the like, the controller 81 can acquire the positions of the four corners of the recording medium with accuracy.

In the predetermined direction of the recording medium, when the distance from the area where the image is formed (printing area) to the end portion of the recording medium in the predetermined direction is larger than the threshold value, the controller 81 excludes the reference position on the end portion side of the recording medium from the reference positions used for detecting the misregistration.

A position separated from the printing area has a large variation after alignment. The controller 81 excludes the reference position away from the printing area, thus allowing accuracy in detection of misregistration to be improved. Furthermore, the controller 81 can determine, with relatively simple processing, whether the printing area and the reference position are far from each other, by using the distance from the printing area to the end portion of the recording medium in the predetermined direction.

In the example shown in FIG. 10, the distance L2 from the printing area 91 to the bottom end of the recording medium 90 in the conveyance direction of the recording medium 90 is greater than the threshold value H/2. Therefore, the controller 81 excludes the corners T3 and T4 on the lower end side of the recording medium 90 from the reference position used for detecting the misregistration.

The controller 81 excludes, from the reference positions used for detecting misregistration, a reference position having a relatively large distance from an area where an image is formed (printing area). The controller 81 excludes the reference position away from the printing area, thus allowing accuracy in detection of misregistration to be improved.

In the example illustrated in Fig. 11, comparing the distances a to d from the printing area 91 to the four corners T1 to T4 of the recording medium 90, the distances are in the order of the distances c, a, d, and b from largest to smallest. Therefore, the controller 81 excludes the lower left corner T3 and the upper left corner T1, which are relatively far from the printing area 91, from the reference position used for detecting the misregistration.

The controller 81 selects at least two of the four corners of the recording medium as reference positions used for detecting misregistration. Thus, the controller 81 can improve accuracy in detection of misregistration.

Note that the descriptions in the above embodiment are examples of the image inspection apparatus, the image forming apparatus, the image inspection method, and the program according to the present disclosure and are not limited thereto. The detailed configuration and the detailed operation of each part forming the apparatus can also be appropriately changed without departing from the spirit of the present disclosure.

For example, in the above-described embodiment, the case where the image forming apparatus 100 (image inspection apparatus) includes the image forming section 40 and the image reading section 70 has been described. Instead of this, the image inspection apparatus may acquire a read image generated by an external image reading section (image reading device) reading a recording medium on which an image is formed by an external image forming section (image forming apparatus), and set the read image as an inspection target. Further, in the above-described embodiment, each process performed by the image forming apparatus 100 may be performed by a plurality of apparatuses in cooperation with each other.

Furthermore, in the misregistration detection processing (see Fig. 3), also in a case where the reference image is an RIP image, a background area corresponding to the outside of the recording medium area is assumed to be added to the reference image in a pseudo manner. Alternatively, when the reference image is an RIP image, no background area may be added to the reference image. In this case, the controller 81 may treat the end portion of the image data of the reference image as the position corresponding to the edge of the recording medium.

In addition, when the controller 81 selects the reference position used for detecting the misregistration from the four corners of the recording medium, a simpler method may be used. For example, the controller 81 may exclude a reference position at which a distance from an area (printing area) in which an image is formed is equal to or greater than a threshold value set in advance from the reference positions used for detecting the misregistration. Here, the distance from the printing area to a certain reference position is a distance between a position closest to the reference position in the printing area and the reference position. The controller 81 excludes the reference position away from the printing area, thus allowing accuracy in detection of misregistration to be improved.

Furthermore, although the controller 81 acquires the area where the image is formed (printing area) as a rectangular area in the embodiment described above, it is not limited thereto. The controller 81 only needs to be able to recognize, as the area where the image is formed, an approximate area where the image is formed.

In addition, in the reference position selection processing (refer to FIGS. 7 to 9), the case where the threshold value in the conveyance direction of the recording medium is set to H/2 and the threshold value in the width direction of the recording medium is set to W/2 has been described, but the threshold value in each direction can be appropriately changed. Furthermore, the threshold value in each direction may be set for each size of the recording medium.

Furthermore, the case has been described where, in the reference position selection processing (see Figs. 7 to 9), a reference image is set as a target image, an area where an image is formed (printing area) is determined, and a reference position used for detecting misregistration is selected. Instead of this, if there is a margin in the processing time, the controller 81 may set the read image as the target image, determine the area where the image is formed, and select the reference position used for detecting the misregistration.

In addition, in a case where two or more reference positions cannot be selected from the read image or the reference image for some reason, the controller 81 may select the reference position using another threshold value different from the threshold value (H/2, W/2, or the like) set in advance.

In addition, in a case where two or more reference positions cannot be selected from the read image or the reference image for some reason, the controller 81 may not perform inspection as to whether or not there is an abnormality in the read image (inspection target image).

The computer-readable medium that stores the program for executing each processing is not limited to the above-described example. Furthermore, a carrier may be applied as a medium for providing data of the program via a communication line.

The disclosed embodiment is for purposes of explanation and example only, and is not intended to be limiting. The scope of the present disclosure should be interpreted by the description in the claims.

Although embodiments of the present invention have been described and illustrated in detail, the disclosed embodiments are made for purposes of illustration and example only and not limitation. The scope of the present invention should be interpreted by terms of the appended claims.

## Claims

1. An image inspection apparatus (100) that compares a read image generated by reading a recording medium on which an image is formed with a reference image to detect misregistration of an image formation position on the recording medium, the apparatus comprising a controller (81) that:
aligns an image included in the read image and an image included in the reference image; and
detects the misregistration of the image formation position based on a deviation between a reference position in the read image and a reference position in the reference image in an aligned state, wherein
the controller selects a reference position used for detecting the misregistration from reference positions included in the read image and the reference image based on a position of an area in which an image is formed on the recording medium.

2. The image inspection apparatus according to claim 1, wherein the reference position is four corners of the recording medium.

3. The image inspection apparatus according to claim 2, wherein the controller calculates positions of the four corners of the recording medium based on edge information of the recording medium.

4. The image inspection apparatus according to claim 2, wherein when, in a predetermined direction of the recording medium, a distance from an area where the image is formed to an end portion of the recording medium in the predetermined direction is greater than a preset threshold value, the controller excludes a reference position on a side of the end portion of the recording medium from the reference position used for detecting the misregistration.

5. The image inspection apparatus according to claim 2, wherein the controller excludes a reference position at which a distance from the area in which the image is formed is equal to or greater than a preset threshold value from the reference position used for detecting the misregistration.

6. The image inspection apparatus according to claim 5, wherein the distance from the area where the image is formed to the reference position is a distance between a position closest to the reference position in the area where the image is formed and the reference position.

7. The image inspection apparatus according to claim 2, wherein the controller selects at least two of the four corners of the recording medium as the reference position used for detecting the misregistration.

8. An image forming apparatus comprising:
the image inspection apparatus according to any one of claims 1 to 7;
an image former that forms an image on the recording medium; and
a reader that generates a read image by reading the recording medium on which the image is formed.

9. An image inspection method of comparing a read image generated by reading a recording medium on which an image is formed with a reference image to detect misregistration of an image formation position on the recording medium, the method comprising:
aligning an image included in the read image and an image included in the reference image;
detecting, in an aligned state, the misregistration of the image formation position based on a deviation between a reference position in the read image and a reference position in the reference image;
and
selecting, based on a position of an area where an image is formed on the recording medium, a reference position used for detecting the misregistration from among reference positions included in the read image and the reference image.

10. A program for a computer that compares a read image generated by reading a recording medium on which an image is formed with a reference image to detect misregistration of an image formation position on the recording medium, the program causing the computer to perform:
aligning an image included in the read image with an image included in the reference image; and
detecting, in an aligned state, the misregistration of the image formation position based on a deviation between a reference position in the read image and a reference position in the reference image, wherein
the program further causes the computer to perform selecting a reference position used for detecting the misregistration from among reference positions included in the read image and the reference image based on a position of an area in which an image is formed on the recording medium.
